# EUROPÄISCHE PATENTANMELDUNG

(11) **EP 1 905 741 A1**
(43) Veröffentlichungstag der Anmeldung: **02.04.2008**
(21) Anmeldenummer: 07116795.1
(22) Anmeldetag: 20.09.2007
(51) Int. Cl.: C01B 33/148

(54) **Verfahren zur Herstellung feststoffreicher Kieselsole**

(30) Priorität: 21.09.2006 DE 102006004520
(71) Anmelder: H.C. Starck GmbH, 38642 Goslar (DE)
(72) Erfinder: Puppe, Lothar, 51399 Burscheid (DE)
(74) Vertreter: Clauswitz, Kai-Uwe Wolfram

(57) **Zusammenfassung**

Die Erfindung betrifft ein Verfahren zur Herstellung feststoffreicher Kieselsole durch Zusatz von Polycarboxylaten sowie Kieselsale, die nach diesem Verfahren erhältlich sind.

## Beschreibung

Die Erfindung betrifft ein Verfahren zur Herstellung feststoffreicher Kieselsole durch Zusatz von Polyethercarboxylaten sowie Kieselsole, die nach diesem Verfahren erhältlich sind.

Kieselsole sind sedimentationsstabile, kolloidale Lösungen aus amorphem SiO₂ in Wasser, Alkoholen und/oder anderen polaren Lösemitteln. Sie sind in der Regel wasserflüssig und die erhältlichen Handelsprodukte haben zum Teil schon relativ hohe Feststoffkonzentrationen in Abhängigkeit von der Teilchengröße bzw. BET-Oberfläche und weisen eine grosse Stabilität gegen Gelierung auf. Die Feststoffkonzentrationen sind jedoch stark von der Teilchengröße der SiO₂-Partikel im Sol abhängig. So ist ein Kieselsol mit einer BET von ca. 500 m²/g und einem Teilchendurchmesser von 5 bis 6 nm als stabiles Sol nur mit15 Gew.-% SiO₂ im Handel und ein Sol mit 300 bis 350 m²/g Oberfläche und einem Teilchendurchmesser von 9 bis 10 nm wird als Kieselsol mit lediglich 30 Gew.-% SiO₂ in den Verkehr gebracht. Nur bei BET-Oberflächen kleiner gleich 200 m²/g und mittleren Teilchengrößen >40 nm für das Kieselsol lassen sich Feststoffgehalte in Abhängigkeit von der Teilchengröße von bis zu 40 und 50 Gew.-% einstellen. So liegt bei einem Kieselsol mit einer Teilchengröße von ca. 12 nm ( ~200 m²/g) die maximale Feststoffgehaltgrenze zwischen 35 bis 40 Gew.-% und bei einem Kieselsol mit einer Teilchengröße von 80 bis 100 nm zwischen 50 und 55 Gew.- %. Beispielsweise ist ein Kieselsol mit einer BET-Oberfläche von ca. 200 m²/g als Sol mit einem Feststoffgehalt von 50 Gew.-% nicht stabil bzw. gar nicht herstellbar, da vorher Gelierung auftritt. Ein Kieselsol mit 300 m²/g und 40 Gew. % Feststoffgehalt ist ebenfalls nicht ausreichend stabil.

Insbesondere bei kleinpartikulären Solen ist es jedoch wünschenswert, höhere Feststoffkonzentrationen als 30 Gew.-% SiO₂ zu erreichen, da häufig für unterschiedliche Anwendungen die Vorteile der kleinen Teilchen, wie hohe Gelfestigkeit beim Einsatz als Bindemittel und schnelle Reaktionszeiten bei der Sol-Gelumwandlung, nicht ausgenutzt werden können, weil die Feststoffkonzentrationen nicht ausreichend sind. Durch die geringen Feststoffkonzentrationen ist zuviel Wasser im System, welches erst entfernt werden muss. Dies führt zu längeren Reaktionszeiten beim Abbinden als Bindemittel bzw. beim Beschichten von Substraten mit dem Sol anschließender Sol-Gelumwandlung. Es ist erstrebenswert, z. B. bei Sol-Gel-Anwendungen, die hohe Reaktivität der Kieselsole mit großen spezifischen Oberflächen und die hohe Festigkeit der Gele auszunutzen, um letztendlich feste Filme, die aus diesen Solen mit hohen Oberflächen entstehen, zu erhalten.

Es bestand demnach weiterhin Bedarf daran, stabile Kieselsole mit hohem, vorzugsweise über dem Gelpunkt liegendem Feststoffgehalt bereitzustellen. Insbesondere sind hier die feinteiligen Kieselsole mit hohen BET-Oberflächen von Interesse.

In der Literatur werden immer wieder Kieselsole mit hohen über dem Gelpunkt liegenden Feststoffgehalten beschrieben, aber es werden keine Aussagen über die Stabilität dieser Kieselsole gemacht. In der Patentanmeldung WO-A 99/01377 wird ein sehr aufwendiges Verfahren zur Herstellung eines feinteiligen Kieselsols mit hohem Feststoffgehalt beschrieben, dessen Aufkonzentration nur über einen Ultrafiltrationsschritt erreichbar ist und die Stabilität durch verschiedene Teil-Ionenaustauschschritte und Teil-Alkalisierungen verbessert wird. Das in WO-A 99/01377 beschriebene Verfahren hat den Nachteil, dass es für eine kommerzielle Anwendbarkeit zu aufwendig und nicht für das sonst übliche verfügbare Teilchendurchmessern-Spektrum von Kieselsolen anwendbar ist. Das in WO-A 99/01377 erhaltene Kieselsol weist zudem lediglich eine Standzeit von weniger als 6 Monaten auf.

Die Aufgabe der vorliegenden Erfindung bestand somit darin, ein einfaches Verfahren zur Herstellung von Kieselsolen mit hohen Feststoffgehalten aufzufinden sowie solche stabilen Kieselsole mit hohen Feststoffgehalten bereitzustellen.

Überraschend wurde gefunden, dass der Zusatz kleiner Mengen anionischer Polyetlacrcarboxylate die Herstellung von Kieselsolen mit höheren Feststoffgehalten ermöglicht. Die Stabilität solcher Kieselsole mit hohem Feststoffgehalt wird durch den Zusatz der Polyethercarboxylate deutlich erhöht, in bevorzugten Ausführungsformen sogar über deren Gelpunkt hinaus. Ebenso wurde gefunden, das sich die Eigenschaften wie z. B. Teilchendurchmesser, pH-Wert und BET-Oberfläche des Sols durch den Zusatz nicht verändern. Naturgemäß steigen die Dichte und die Viskosität entsprechend des Feststoffanteils an.

Die Möglichkeit, hochkonzentrierte Kieselsole mittels Polyethercarboxylatzusatz zu erzielen, ist in der Literatur bisher nicht beschrieben. Polycarboxylate, im Zusammenhang mit Kieselsolen sind beispielsweise in Form einer Mundwassermischungsrezeptur, die als Additiv ein Polyethercarboxylat wie zB. Maleinanlaydrid-Benzylmethylether-Copolymer und unter anderem neben den üblichen Bestandteilen ein Kieselsol enthält, beschrieben (vgl. WO-A 94/00103). Weiterhin sind Mörtelzusammensetzungen bekannt, die unter anderem als Zusatz auch Kieselsole und Polycarboxylate und /oder sulfonierte Naphthalin-Formaldehyd-Kondensate enthalten (vgl. z. B. WO-A 2001098227 und WO-A 2001090024). In JP-A 11267585 wird eine Zusammensetzung für eine Beschichtungsrezeptur beschrieben, die neben zahlreichen verschiedenen Komponenten auch Kieselsole und ein Polycarboxylat, wie z.B Glycidyl-Methacryl-Bu-Methacrylat-Me-Methaerylat-2-Etlayl-Acrylat-Copolymer enthält.

Gegenstand der vorliegenden Erfindung ist ein Verfahren zur Aufkonzentrierung eines Kieselsols, dadurch gekennzeichnet, dass
- ein Kieselsol mit einer BET-Oberfläche von 15 bis 1000 m²/g und einem Feststoffgehalt von bis zu 45 Gew.-% Siliziumdioxid, bezogen auf das Gesamtgewicht des Kieselsols, mit 0,01 bis 10 Gew.-% eines oder mehrerer anionischer Polyethercarboxylate, bezogen auf das Gesamtgewicht der Mischung, gemischt wird und
- anschließend die erhaltene Mischung auf einen Feststoffgehalt von 20 bis 70 Gew.-% Siliziumdioxid, bezogen auf das Gesamtgewicht der Mischung, aufkonzentriert wird.

Die Aufkonzentrierung von bis zu 45 Gew.-% auf einen Feststoffgehalt von 20 bis 70 Gew.-% ist gemäß erfindungsgemäßem Verfahren so zu verstehen, dass von einem niedrigeren Feststoffgehalt im eingesetzten Kieselsol durch Aufkonzentrieren ein höherer Feststoffgehalt als vorher erreicht wird. Um ein Kieselsol mit 20 Gew.-% Feststoffgehalt zu erhalten muss demnach von einem Kieselsol mit einem Feststoffgehalt von weniger als 20 Gew.-% ausgegangen werden.

Das oder die anionischen Polyethercarboxylate werden dem Kieselsol bevorzugt in einer Menge von 0,05 bis 10 Gew.-%, besonders bevorzugt in einer Menge von 0,1 bis 2,0 Gew.-% zugemischt.

Als anionische Polyethercarboxylate kommen sowohl lineare als auch verzweigte Polyethercarboxylate in Frage. Die anionisch geladenen Polymere werden beispielsweise durch Homo- oder Copolymerisation von Polycarbonsäuren oder auch Sulfonsäuren hergestellt und können geladene oder ungeladene Seitenketten unterschiedlichster Art enthalten, wie z. B Alkylketten, Polyethergruppen u. a.. Die Molekulargewichte können zwischen 1.000 und 2.000.000, bevorzugt zwischen 5.000 und 30.000 g/mol.Hegen

Bevorzugt sind synthetische verzweigte anionische geladene Polyethercarboxylate. Hierunter ist eine Gruppe von Verbindungen subsummiert, die aus einer ladungstragenden Polyetherhauptkette bestehen und über - in Anzahl und Kettenlänge - variierende ungeladene Polyethylen-Seitenketten mit Molekulargewichten von 500 bis 6000 g/mol - bezogen auf die Seitenketten und berechnet aus den Gesamtmolekulargcwichten - verfügen. Die Hauptkette erhält man beispielsweise durch Copolymerisation von Polyacrylsäuren, Maleinsäuren oder auch Polyolen und Vinylethern. Sie trägt über Carboxylgruppen die negative Ladung, die durch Kationen wie z.B. Na, K oder Calcium und Ammonium ausgeglichen wird. Die Molgewichte (Gewichtsmittel) reichen bevorzugt von 1.000 bis 50.000 g/mol - besonders bevorzugt sind Molgewichte von 5.000 bis 30.000 g/mol. Bestimmt werden die Molekulargewichte beispielsweise durch Gelpemieationschromatographie. Die Durchführung der Gelpermeationschromatographie ist dem Fachmann bekannt. Ein weiteres Kennzeichen dieser anionisch geladenen Polymere ist ihre dreidimensionale Form, die durch das Verhältnis des Durchmessers zur Länge der Hauptkette ausgedrückt werden kann. Der Durchmesser des Polyethercarboxylats (Ausdehnung der Polyalkylseitenketten) kann beispielsweise zwischen 1,8 und 20 nm, die Länge der Polyetherhauptkette zwischen 3 und 15 nm liegen. Die Länge der Hauptkette und der der Durchmesser der Polyethercacarboxylate mit den Seitenketten werden unter Annahme einer gewinkelten Kette durch Berechnung ermittelt. Derartige Polyethercarboxylate werden als Dispergierhilfsmittel für anorganische Pigmente, wie Titandioxid, transparentes Eisenoxid oder Zinkoxid und Füllstoffe eingesetzt. Solche im Rahmen der Erfindung geeigneten Polyethercarboxylate sind beispielsweise in der nachstehenden Tabelle aufgeführt. Sie werden in Form wässriger Lösungen von 35 bis 60 Gew. % als auch in der Form von Pulvern eingesetzt und haben verschiedene Gegenionen wie K⁺, Na⁺ Ammonium und/oder Ca²⁺. Mit Na⁺ oder K⁺ als Gegenion sind sie mit Kieselsolen besonders gut verträglich.

**Tab. 1: Auswahl geeigneter Polyethercarboxylate**

| **Produkt** | **Länge der Hauptkette [nm]** | **Durchmesser des Polymers [nm]** | **Gegenion** | **Molgewicht gesamt [g/mol]** |
|---|---|---|---|---|
| Melpers^{®} 2450 | 6,3 | 12,8 | Na⁺ | 10 000 |
| Melpers^{®} 4100 | 11,9 | 25,2 | Ca²⁺ | |
| Melpers^{®} 0030 | 6,6 | 75,6 | Na⁺ | 20 000 |
| Melpers^{®} 1000 | 3,4 | 12,8 | Na⁺ | |
| Melpers^{®} 5344 | 12,4 | 6,8 | Na⁺ | |
| Melpers^{®} 5940 | 9,9 | 25,2 | Na⁺ | |
| Melpers^{®} VP1828 | | | Na⁺ | |

Derartige Polyethercarboxylate und deren Herstellung sind dem Fachmann bekannt (vgl. beispielsweise DE 43 388 867 A1) und teilweise auch kommerziell erhältlich (vgl. z.B. auch Produkte der Fa. SKW Polymers GMBH, Trostberg vertrieben unter dem Handelsnamen Melpers^{®} gemäß Tab. 1).

Das Mischen des Kieselsols mit dem oder den Polyethercarboxylat(en) kann in beliebiger Reihenfolge der Zugabe erfolgen. Es ist zum einen möglich das oder die Polyethercarboxylat(e) dem Kieselsol zuzugeben und die beiden Komponenten anschließend beispielsweise durch Rühren zu vermischen. Es ist aber auch andererseits möglich, zuerst das oder die Polyethercarboxylat(e) gegebenenfalls in Form einer Lösung, vorzugsweise in Form einer wässrigen Lösung, vorzulegen und das Kieselsol zuzugeben und die beiden Komponenten anschließend beispielsweise durch Rühren zu vermischen. Das Zusammengeben und Mischen kann bei unterschiedlichsten Temperaturen erfolgen. Bevorzugt sind Temperaturen von 5° bis 100°C, besonders bevorzugt von 15 bis 50°C. Ganz besonders bevorzugt erfolgt das Zusammengeben und Mischen bei Raumtemperatur.

Geeignete Verfahren zur Aufkonzentrierung der Kieselsol-Polyethercarboxylat-Mischungen gemäß erfindungsgemäßem Verfahren sind beispielsweise das thermische Eindampfen dieser Mischung auf die gewünschte SiO₂-Konzentration oder auch die schonende Aufkonzentration mit Hilfe der Ultrafiltration. Solche Verfahren sind dem Fachmann grundsätzlich bekannt und beispielsweise in DE-A 42 16 119 beschrieben. Das Aufkonzentrieren mittels thermischem Eindampfen kann beispielsweise bei Temperaturen von 20 bis 100°C erfolgen. Dabei kann unter vermindertem Druck oder Atmosphärendruck gearbeitet werden. Das Aufkonzentrieren mittels Ultrafiltration kann beispielsweise in der Weise erfolgen, dass das Kieselsol über eine Membran (Keramik- oder Polymermembran) geleitet wird, wobei ein Teil der flüssigen Phase als Permeat durch die Membran hindurchgeht und das Kieselsol als sogenanntes Retentat mit höherer Konzentration an SiO₂ die Membran verlässt. Um hohe Durchflüsse zu erzielen wird bei Keramikmembranen bevorzugt bei höheren Temperaturen gearbeitet, da dann eine niedrigere Viskosität des Kieselsols resultiert.

Bevorzugt werden Kieselsole mit einer BET-Oberfläche von 15 bis 800 m²/g, besonders bevorzugt von 50 bis 700 m²/g, ganz besonders bevorzugt von 100 bis 600 m²/g eingesetzt. Die spezifischen Oberflächen können entweder nach der BET-Methode (s. S. Brunauer P. H. Emmet und E. Teller, J. Am. Soc.,1938, 60, S. 309) an getrocknetem SiO₂-Pulver oder direkt in Lösung durch Titration nach G.W. Sears (s. Analytical Chemistry, Bd. 28, S. 1981, Jg. 1956) bestimmt werden. In der vorliegenden Beschreibung werden, soweit nichts anderes angegeben ist, Werte für die spezifische Oberfläche angegeben, die nach der BET-Methode ermittelt wurden.

Die Siliziumdioxid-Partikel des eingesetzten Kieselsols weisen vorzugsweise einen mittleren Teilchendurchmesser von 3 nm bis 250 nm auf, besonders bevorzugt von 5 bis 150 nm und ganz besonders bevorzugt von 9 bis 120 nm auf. Für die Messung der Teilchendurchmesser im Nanometerbereich sind neben Elektronenmikroskop-Aufnahmen noch weitere verschiedene Methoden geeignet wie z.B. Laserkorrelationsspektroskopie, Photonenkorrelations-spektroskopie, Ultraschall-Messungen oder Messungen mit einer Ultrazentrifuge (Sedimentation). Die Ultrazentrifuge ist aufgrund ihrer hohen Trennschärfe besonders gut geeignet, Teilchengrößenverteilungen von Nanopartikeln zu bestimmen. Das Besondere bei der Ultrazentrifuge besteht darin, dass vor der eigentlichen Messung eine Fraktionierung der Dispersion nach der Teilchengröße erfolgt. In einer homogenen Dispersion sedimentieren bekanntlich die großen Partikel schneller als die ebenfalls vorhandenen mittelgroßen und kleinen Partikel. Bei Durchstrahlung der Ultrazentrifugenzelle mit Laserlicht tritt in Abhängigkeit von der Zeit eine deutlich ausgeprägte Intensitätsänderung auf. Aus dieser Intensitätsänderung läßt sich die Konzentrationsänderung der Teilchen und hieraus die Teilchengrößenverteilung berechnen. Lichtquelle ist ein He-Ne-Laser. Die Ultrazentrifuge ermöglicht eine hohe Genauigkeit, ein hohes Auflösungsvermögen, und die Verteilungen sind exakt bestimmbar. Daher sind Messungen der Teilchengrößenverteilung mittels Ultrazentrifuge im Rahmen der Erfindung bevorzugt.

Die eingesetzten Kieselsole können einen pH-Wert von 1,5 bis 12 aufweisen. Bevorzugt weisen sie einen pH-Wert von 2 bis 12, besonders bevorzugt zwischen 8 und 11 auf. Bei pH-Werten oberhalb von 12 tritt zunehmend Peptisierung und Auflösen der Teilchen unter Bildung von Alkalisilikat-Lösung ein, weshalb derartige pH-Werte eher nachteilig sind. Unter den angegebenen pH-Werten sind, soweit nicht anders gekennzeichnet, pH-Werte zu verstehen, die bei 25°C bestimmt werden.

Bevorzugt werden Kieselsole mit einem Feststoffgehalt von 10 bis 40 Gew.-% Siliziumdioxid, besonders bevorzugt von 15 bis 35 Gew.-% Siliziumdioxid, bezogen auf das Gesamtgewicht des Kieselsols, eingesetzt.

Bevorzugt werden die Mischungen auf einen Feststoffgehalt von 35 bis 65 Gew.-% Siliziumdioxid, bevorzugt 40 bis 60 Gew.-% Siliziumdioxid, bezogen auf das Gesamtgewicht der Mischung, aufkonzentriert. Ganz besonders bevorzugt werden mit dem erfindungsgemäßen Verfahren Kieselsol-Polyethercarboxylat-Mischungen erhalten, die über den Gelpunkt des Kieselsols hinaus aufkonzentriert wurden, d.h. einen über dem Gelpunkt des Kieselsols liegenden Feststoffgehalt an Siliziumdioxid aufweisen.

Unter dem Gelpunkt eines Kieselsols ist im Rahmen der Erfindung der Feststoffgehalt an Siliziumdioxid zu verstehen, bei der Kieselsole mit Kieselsolpartikel einer bestimmten Partikelgröße bei einer bestimmten Temperatur irreversibel gelieren. Im Rahmen der Erfindung ist das definitionsgemäß der Feststoffgehalt an Siliziumdioxid mit dem ein Kieselsol bei 50°C innerhalb von 6 Monaten geliert.

Kieselsole können durch Kondensation von Monokieselsäuren über eine Keimbildungsphase in einem sog, Aufwachsprozess, bei dem kleine SiO₂-Partikel auf anwesende Keime aufwachsen, hergestellt werden. Man geht von molekularen Silikatlösungen, frisch hergestellten verdünnten Kieselsäurelösungen (sog. Frischsol) aus, die Partikel kleiner 5 nm enthalten. Seltener wird Kieselsol durch Peptisierung von Kieselgelen gewonnen oder über andere Verfahren, z.B. Dispergieren von amorphen SiO₂-Partikeln hergestellt. Der überwiegende Teil der im technischen Maßstab durchgeführten Verfahren zur Herstellung von Kieselsolen setzt als Ausgangsmaterial technische Wassergläser ein.

Geeignet für das Verfahren sind Natronwassergläser oder Kaliwassergläser, wobei aus Kostengründen Natronwassergläser bevorzugt sind. Handelsübliches Natronwasserglas hat eine Zusammensetzung von Na₂O ˙ 3,34 SiO₂ und wird bevorzugt durch Schmelzen von Quarzsand mit Soda oder einer Mischung aus Natriumsulfat und Kohle hergestellt, wobei man ein durchsichtiges farbloses Glas erhält, sog. Stückglas. Dieses Stückglas reagiert in gemahlener Form mit Wasser bei erhöhter Temperatur und Druck zu kolloidalen, stark alkalischen Lösungen, die anschließend noch einer Reinigung unterzogen werden.

Bekannt sind auch Verfahren, bei denen feinteiliger Quarz oder andere geeignete SiO₂-Rohstoffe unter hydrothermalen Bedingungen mit Alkalien direkt zu wässrigen Wassergläsern aufgeschlossen werden.

Zur Herstellung der eingesetzten Kieselsole ist eine alkalifreie SiO₂-Lösung notwendig, die durch Entfernung der Alkalikationen aus dem Wasserglas erzeugt wird. Die gebräuchlichste Methode der Entalkalisierung ist die Behandlung der verdünnten Wasserglaslösungen mit Kationenaustauscherharzen in der H⁺-Form. Geeignete Ionenaustauscherharze sind Lewatit^{®}-Typen der Fa. Lanxess AG. Vorzugsweise werden Wasserglaslösungen mit einem Siliziumdioxid-Gehalt unter 10 Gew.% über Austauschersäulen mit sauren Ionentauschern geleitet. Wichtig sind kurze Verweilzeiten in der Austauschzone, in welcher der pH-Wert der Lösungen 5 bis 7 beträgt, um eine Gelierung der Lösungen und eine Verkieselung des Austauscherharzes zu vermeiden.

Die anfallende verdünnte Kieselsäurelösung (das sog. Frischsol) ist sehr instabil und wird vorzugsweise sofort durch erneute Alkalisierung und durch Aufwachsen auf vorhandene Kieselsolteilchen und durch gleichzeitige, zwischenzeitige oder nachgeschaltete thermische Behandlung stabilisiert und aufkonzentriert. Die Aufkonzentration kann thennisch durch Eindampfen oder durch Ultrafiltration über Membranen erfolgen. Geeignet dafür sind keramische Membranen. Besonders bevorzugt wird das Kieselsol stabilisiert, indem man die Lösung bis auf ein SiO₂ : Na₂O-Verhältnis von 60 bis 130 : 1 alkalisiert, einen Teil der Lösung zur Teilchenvergrösserung auf 60 bis 100°C erwärmt, und anschließend die Frischsollösung koninuierlich zugibt und auf die bereits vorhandenen Teilchen aufwachsen lässt. Gleichzeitig oder nachfolgend kann durch Eindampfen eine Aufkonzentrierung der Lösung auf die gewünschte Konzentration vorgenommen werden. Ein nur über anorganische Basen alkalisiertes feinteiliges Kieselsol (mittlerer Teilchendurchmesser üblicherweise kleiner 10 nm) hat den Nachteil, dass die BET-Oberfläche nicht stabil bleibt. Daher können solche Kieselsole beispielsweise mit Aluminiumionen stabilisiert werden (s. K.K. Iler, The Chemistry of Silica, Wiley & Sons, New York, 1979, Seiten 407- 410).

Eine ausführliche Darstellung der Eigenschaften, Charakterisierung und Herstellung der Kieselsole findet sich in K.K. Iler, The Chemistry of Silica, Wiley & Sons, New York, 1979, Seiten 312 bis 461.

Für den Einsatz im erfindungsgemäßen Verfahren geeignete Kieselsole sind auch kommerziell mit unterschiedlichen Feststoffgehalten unterhalb des Gelpunktes im Handel erhältlich.

Überraschend besitzen die nach dem erfindungsgemäßen Verfahren hergestellten Kieselsol-Polyethercarboxylat-Mischungen eine hohe Stabilität. Mit dem erfindungsgemäßen Verfahren lassen sich in Abhängigkeit von der Partikelgröße Feststoffgehalte des Kieselsols bis zu 70 Gew.-% SiO₂ einstellen. Diese Feststoffgehalte liegen teilweise bereits über dem Gelpunkt, den ein aufkonzentriertes Kieselsol des gleichen Festsoffgehalts an Siliziumdioxid ohne den Polyethercarboxylatzusatz aufweisen würde.

Solche stabilen Kieselsol-Polyethercarboxylat-Mischungen sind bisher in der Literatur nicht beschrieben und daher ebenfalls Gegenstand der vorliegenden Erfindung.

Die erfindungsgemäßen Kieselsole sind beispielsweise für den Einsatz als Bindemittel im Feingussbereich, im Klebstoff-Sektor, im Feuerfestbereich, bei der Herstellung von Katalysatoren und für Fasern, weiterhin für Beschichtungen von Papier, in der Getränkeklärung, im Textilsektor als Schiebefestausrüstung, im Papiersektor für Rutschfestausrüstungen, im Bausektor als Additive für Beton, für Gelbatterien, als Poliermittel für Siliciumscheiben und bei der Herstellung von dünnen Schichten für die Elektronik als auch bei der Papierretention geeignet.

Die folgenden Beispiele dienen der beispielhaften Erläuterung der Erfindung und sind nicht als Beschränkung aufzufassen.

### Beispiele

### Beispiel 1: Erfindungsgemäße Herstellung einer Kieselsol-Polyethercarboxylat-Mischung mit einer BET-Oberfläche von 300 m²/g, einem SiO₂-Gehalt von 40 Gew.-% und einem mittleren Teilchendurchmesser von 9 nm

Es wurden 999 g Kieselsol 300/30% (d.h. mit einer BET-Oberfläche von 300 m²/g, einem SiO₂-Gehalt von 30 Gew.-% und einem mittleren Teilchendurchmesser von 9,2 nm) in einem Reaktionskolben vorgelegt, mit 1 g Melpers^{®} 2450 der Fa. SKW Trostberg (Polyethercarboxylat) versetzt und durch Kochen bei 100°C auf 40 Gew.-% SiO₂ aufkonzentriert.

| | |
|---|---|
| SiO₂-Gehalt: | 40 % |
| Viskosität: | 13,3 mPas |
| Dichte: | 1,290 g/ml |
| MittlererTeilchendurehmesser: | 9,2 nm |

Zur Bestimmung der Lagerstabilität wird nach dem Abkühlen das Kieselsols bei 50°C gelagert. Nach 8 Monaten bei 50°C ist das Kieselsol noch nicht geliert

### Vergleichsbeispiel 1: Herstellung eines Kieselsols mit einer BET-Oberfläche von 300 m²/g, einem SiO₂-Gehalt von 40 Gew.-% und einem mittleren Teilchendurchmesser von 9 nm

Es wurden 1000 g Levasil 300/30% in einem Reaktionskolben vorgelegt, und durch Kochen bei 100°C auf 40 Gew.-% SiO₂ aufkonzentriert

| | |
|---|---|
| SiO₂-Gehalt: | 40,1% |
| Viskosität: | 20 mPas |
| Dichte: | 1,292 g/ml |
| MittlererTeilchendurchmesser: | 9 nm |

Zur Bestimmung der Lagerstabilität wird nach dem Abkühlen ein Teil des Kieselsols bei 50°C gelagert. Nach 3,5 Monaten bei 50°C ist das Kieselsol geliert

### Beispiel 2: Erfindungsgemäße Herstellung einer Kieselsol-Polyetherarboxylat-Mischung mit einer BET-Oberfläche von 200 m²/g, einem mittleren Teilchendurchmesser von 15 nm und einem SiO₂-Gehalt von 50 Gew.-%

Es wurden 999 g Kieselsol 200/40% mit einem BET-Oberfläche von 200 m²/g und einem mittleren Teilchendurchmesser von 15,4 nm in einem Reaktionskolben vorgelegt, mit 1 g Melpers^{®} 2450 der Fa. SKW Trostberg (Polyethercarboxylat) versetzt und durch Kochen bei 100°C auf 50 Gew.-% SiO₂ aufkonzentriert.

| | |
|---|---|
| SiO2-Gehalt: | 50,1% |
| Viskosität: | 72 mPas |
| Dichte: | 1,392 g/ml |
| Mittlerer Teilchendurchmesser: | 15,6 nm |

Zur Bestimmung der Lagerstabilität wird nach dem Abkühlen das Kieselsols bei 50°C gelagert. Das Kieselsol ist nach 6 Monaten bei 50°C unverändert und noch nicht geliert.

### Vergleichsbeispiel 2: Herstellung eines Kieselsols mit einer BET-Oberfläche von 200 m²/g und einem SiO₂-Gehalt von 50 Gew.-%

Es wurden 1000 g Kieselsol 200/40% in einem Reaktionskolben vorgelegt und versucht, langsam durch Kochen bei 100°C auf einen Feststoffgehalt von größer 40 Gew.-% SiO₂ aufzukonzentrieren. Bei 46 Gew.-% Feststoffgehalt steigt die Viskosität stark an und es kommt zu Anbackungen. Ein weiteres Aufkonzentrieren ist nicht möglich.

### Beispiel 3: Erfindungsgemäße Herstellung einer Kieselsol-Polyetherarboxylat-Mischung mit einer BET-Oberfläche von 300 m²/g, einem mittleren Teilchendurchmesser von 9,3 nm und einem SiO₂-Gehalt von 40 Gew.-%

Es wurden 999 g Kieselsol 300/30% in einem Reaktionskolben vorgelegt, mit 1 g Melpers^{®} 1828 der Fa. SKW Trostberg (Polyethercarboxylat) versetzt und durch Kochen bei 100°C auf 40 Gew.-% SiO₂ aufkonzentriert.

| | |
|---|---|
| SiO₂-Gehalt: | 40 % |
| Viskosität: | 13,3 mPas |
| Dichte: | 1,290 g/ml |
| Mittlerer Teilchendurchmesser: | 9,2 nm |

Zur Bestimmung der Lagerstabilität wird nach dem Abkühlen ein Teil des Kieselsols bei 50°C gelagert. Nach 7 Monaten bei 50°C ist das Kieselsol noch nicht geliert.

Die Beispiele zeigen deutlich, dass durch den Zusatz der Polyethercarboxylate ein Gelieren der erhaltenen Kieselsol-Polyetherarboxylat-Mischungen verhindert werden kann, obwohl die Kieselsole ohne Polyethercarboxylatzusatz mit gleicher BET-Oberfläche und gleichem SiO₂-Gehalt bereits gelieren, d.h. Feststoffgehalte oberhalb ihres Gelpunktes aufweisen.

## Patentansprüche

1. Verfahren zur Aufkonzentrierung eines Kieselsols, **dadurch gekennzeichnet, dass**
• ein Kieselsol mit einer BET-Oberfläche von 15 bis 1000 m²/g und einem Feststoffgehalt von bis zu 40 Gew.-% Siliziumdioxid, bezogen auf das Gesamtgewicht des Kieselsols, mit 0,01 bis 10 Gew.-% eines oder mehrerer anionischer Polycarboxylate, bezogen auf das Gesamtgewicht der Mischung, gemischt wird und
• anschließend die erhaltene Mischung auf einen Feststoffgehalt von 20 bis 70 Gew.-% Siliziumdioxid, bezogen auf das Gesamtgewicht der Mischung, aufkonzentriert wird.

2. Verfahren gemäß Anspruch 1, **dadurch gekennzeichnet, dass** das eingesetzte Kieselsol eine BET-Oberfläche von 15 bis 800 m²/g aufweist.

3. Verfahren gemäß Anspruch 1 oder 2, **dadurch gekennzeichnet, dass** das eingesetzte Kieselsol einen pH-Wert von 2 bis 12 aufweist.

4. Verfahren gemäß wenigstens einem der Ansprüche 1 bis 3, **dadurch gekennzeichnet, dass** die Siliziumdioxid-Partikel des eingesetzten Kieselsols einen mittleren Teilchendurchmesser von 3 nm bis 250 nm aufweisen.

5. Verfahren gemäß wenigstens einem der Ansprüche 1 bis 4, **dadurch gekennzeichnet, dass** die erhaltene Mischung auf einen Feststoffgehalt von 35 bis 65 Gew.-%, bevorzugt 40 bis 60 Gew.-% aufkonzentriert wird.

6. Verfahren gemäß wenigstens einem der Ansprüche 1 bis 5, **dadurch gekennzeichnet, dass** das eingesetzte Kieselsol mit 0,01 bis 10 Gew.-% eines oder mehrerer anionischer Polycarboxylate.

7. Verfahren gemäß wenigstens einem der Ansprüche 1 bis 6, **dadurch gekennzeichnet, dass** das Aufkonzentrieren der Mischung mittels Ultrafiltration erfolgt.

8. Verfahren gemäß wenigstens einem der Ansprüche 1 bis 6, **dadurch gekennzeichnet, dass** das Aufkonzentrieren der Mischung mittels thermischen Eindampfens erfolgt.

9. Mischungen erhältlich nach einem Verfahren gemäß wenigstens einem der Ansprüche 1 bis 7.
